# EUROPÄISCHE PATENTSCHRIFT

(11) **EP 1 773 555 B1**
(45) Veröffentlichungstag und Bekanntmachung des Hinweises auf die Patenterteilung: **23.09.2009**
(21) Anmeldenummer: 05776993.7
(22) Anmeldetag: 08.08.2005
(51) Int. Cl.: B28C 5/42, F16D 3/77, F16H 1/28

(54) **GETRIEBE ZUM ANTRIEB EINER TROMMEL EINES FAHRMISCHERS**
GEAR TRANSMISSION TO DRIVE THE DRUM OF A DRIVE MIXER
MECANISME DE TRANSMISSION POUR ENTRAINER LE TAMBOUR D'UNE BETONNIERE ROULANTE

(30) Priorität: 07.08.2004 DE 102004038502
(43) Veröffentlichungstag der Anmeldung: 18.04.2007
(60) Teilanmeldung: 07020771.7
(73) Patentinhaber: ZF Friedrichshafen AG, 88038 Friedrichshafen (DE)
(72) Erfinder: HEILIG, Eduard, 88048 Friedrichshafen (DE)
(86) Internationale Anmeldenummer: PCT/EP2005/008586
(87) Internationale Veröffentlichungsnummer: WO 2006/015837

(56) Entgegenhaltungen:
- DE-A1- 2 331 588
- DE-A1- 2 341 250
- DE-A1- 3 121 797
- DE-A1- 10 033 661
- DE-U- 1 984 542
- US-A1- 2004 037 626

## Beschreibung

Die vorliegende Erfindung betrifft ein Getriebe zum Antrieb einer Trommel eines Fahrmischers, nach der im Oberbegriff von Anspruch 1 näher definierten Art.

Getriebe zum Antrieb einer Trommel eines Fahrmischers haben einerseits die Funktion, die Trommel in der Drehrichtung einziehen und in der Drehrichtung entleeren, anzutreiben und andererseits die Gewichtskraft der Trommel und deren Inhalts abzustützen. Hierbei ist es notwendig Relativbewegungen zwischen der Trommel und dem Fahrzeugrahmen des Fahrzeugs über das Getriebe auszugleichen, wobei insbesondere diese Bewegungen bei beladener Trommel und Fahrt des Fahrzeugs in unebenem Gelände auftreten.

Das US-Patent US 6,102,824 und das US-Patent US 3,658,303 offenbaren ein Getriebe zum Antrieb einer Mischtrommel, bei welchem ein Antriebsmotor über eine Planetenstufe einen Abtriebsflansch antreibt, welcher mit der Trommel in Verbindung steht, wobei zwischen einer Abtriebswelle und der Trommel eine sphärische Lagerung mit einer mittigen Bogenzahnkupplung angeordnet ist, welche die Relativbewegungen zwischen der Trommel und dem Fahrzeugrahmen ausgleicht und die Abtriebswelle über Kegelrollenlager drehbar, jedoch ortsfest, im Gehäuse des Mischergetriebes gelagert ist. Diese sphärische Lagerung in Verbindung mit der Bogenzahnkupplung unterliegt der Wartung und benötigt Bauraum zwischen dem Getriebe und der Trommel, welcher jedoch zwischen dem Fahrerhaus des Fahrzeugs und der Trommel nur begrenzt zur Verfügung steht.

Die DE 1 984 542 U offenbart ein Fahrmischergetriebe, gemäß dem Oberbegriff des Anspruchs 1.

Die DE 31 21 797 A1 offenbart ein Fahrmischergetriebe, welches über eine kardanische Aufhängung mit einem Lagerbock verbunden ist.

Die DE 23 41 250 A1 offenbart ein Fahrmischergetriebe, bei welchem der Abtriebsflansch über ein elastisches Element mit dem Hohlrad verbunden ist.

Die DE 100 33 661 A1 offenbart ein Fahrmischergetriebe, bei welchem das Getriebegehäuse über eine sphärische Lagerung mit dem Lagerbock verbunden ist.

Die US 2004/0037626 A1 offenbart ein mechanisches Verbindungselement von rotierenden Bauteilen, welches im elastischen Bereich verformbar ist, um den Bauteilen Freiheitsgrade zu ermöglichen.

Der vorliegenden Erfindung liegt die Aufgabe zugrunde, ein Getriebe, insbesondere zum Antrieb einer Trommel eines Fahrmischers zu schaffen, welches insbesondere in seiner Länge kompakt ausgeführt ist.

Die Aufgabe wird mit einem Fahrmischergetriebe mit den Merkmalen des Hauptanspruchs gelöst.

Erfingdungsgemäß wird der Ausgleich der Relativbewegung zwischen der Trommel und dem Fahrzeugrahmen dadurch gewährleistet, dass mindestens ein Bauteil des Getriebes so ausgebildet ist, dass es durch seine elastische Verformbarkeit diese Relativbewegungen ausführen kann, ohne sich hierbei plastisch zu verformen. Indem hierbei kein zusätzliches Bauteil benötigt wird, sondern ausschließlich durch die Gestaltung der vorhandenen Bauteile die Relativbewegung aufgenommen werden kann, kann das Getriebe, insbesondere in axialer Richtung kompakt ausgeführt werden.

In einer Ausgestaltungsform der Erfindung ist der Abtriebsflansch mit der Abtriebswelle einstückig ausgebildet, wobei die Lagerung der Abtriebswelle über ein sphärisches Lager, beispielsweise ein Pendelrollenlager oder ein sphärisch ausgebildetes Gleitlager erfolgt und die Abtriebswelle zwischen dem Lager und dem Untersetzungsgetriebe Ausnehmungen aufweist, durch welche diese Welle radial beweglich ausgeführt wird, jedoch das Drehmoment übertragen kann.

Durch die spezielle Ausbildung von Bauteilen des Getriebes, so dass diese Bauteile die Bewegungen zwischen der Trommel und dem Fahrzeugrahmen in ihrem elastischen Bereich ausgleichen können, ist es möglich, ohne zusätzliche Bauteile, alle Funktionen des Getriebes zu erfüllen, wobei das Getriebe, insbesondere in axialer Richtung, kompakt ausgeführt sein kann.

Weitere Merkmale sind der Figurenbeschreibung zu entnehmen.

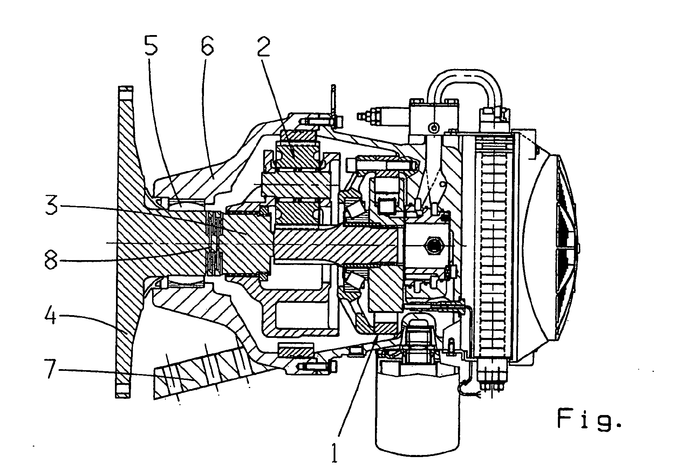

Die einzige Figur zeigt ein Getriebe zum Antrieb einer Mischtrommel mit einem sphärischen Lager zur Lagerung der Abtriebswelle.

Ein Antriebsmotor 1 treibt über ein Planetengetriebe 2 eine Abtriebswelle 3 an. Die Abtriebswelle 3 ist einstückig mit einem Abtriebsflansch 4 ausgeführt, welcher mit einer nicht gezeigten Trommel eines Fahrmischers verbunden ist. Die Gewichtskraft der Trommel, sowie deren Drehbewegungen, werden von einem sphärischen Lager 5, beispielsweise einem Pendelrollenlager oder einem Gleitlager aufgenommen und in das Gehäuse 6 eingeleitet. Das Gehäuse ist über seinen Fuß 7 mit einem nicht gezeigten Lagerbock verbunden, welcher mit dem Fahrzeugrahmen des Fahrzeugs verbunden ist. Zwischen dem sphärischen Lager 5 und dem Planetengetriebe 2 weist die Abtriebswelle 3 Ausnehmungen 8, insbesondere Schlitze, auf, welche so angeordnet sind, dass die Abtriebswelle 3 Drehmoment übertragen kann, jedoch so beweglich wird, dass die Bewegungen der Trommel nicht auf das Planetengetriebe 2 übertragen werden. Vorzugsweise sind die Schlitze abwechselnd versetzt angeordnet, so dass das Drehmoment sicher übertragen werden kann.

### Bezugszeichen

- 1: Antriebsmotor
- 2: Planetengetriebe
- 3: Abtriebswelle
- 4: Abtriebsflansch
- 5: sphärisches Lager
- 6: Gehäuse
- 7: Fuß
- 8: Ausnehmungen

## Patentansprüche

1. Fahrmischergetriebe, zum Antrieb dessen Trommel, bei welchem ein Abtriebsflansch (4) drehfest mit der Trommel des Fahrmischers verbindbar ist und ein Gehäuse (6) des Getriebes ortsfest mit einem Fahrzeugrahmen des Fahrmischers in Verbindung bringbar ist und das Getriebe mindestens ein Bauteil (3, 4) zum Ausgleich von Bewegungen zwischen dem Fahrzeugrahmen und der Trommel aufweist, wobei dieses Bauteil (3, 4) im elastischen Bereich so verformbar ist, dass Bewegungen zwischen der Trommel und dem Fahrzeugrahmen ausgeglichen werden, **dadurch gekennzeichnet, dass** ein Abtriebsflansch (4), welcher mit der Trommel des Fahrmischers verbindbar ist, eine Abtriebswelle (3) aufweist, welcher mit Antriebsteilen (2) des Getriebes verbunden ist und diese Abtriebswelle (3) Ausnehmungen (8) aufweist, durch welche dieser im elastischen Bereich verformbar wird, wobei das Drehmoment über die Abtriebswelle (3) übertragen wird und die Gewichtskraft der Trommel über eine sphärische Lagerung (5) abgestützt wird, wobei die Ausnehmungen (8) zwischen der sphärischen Lagerung und einem Untersetzungsgetriebe (2) angeordnet sind.

## Claims

1. Transit mixer transmission, for driving the mixer drum, in which an output flange (4) can be connected in a rotationally fixed manner to the drum of the transit mixer and a housing (6) of the transmission can be connected in a positionally fixed manner to a vehicle frame of the transit mixer, and the transmission comprises at least one component (3, 4) for compensating for movements between the vehicle frame and the drum, wherein this component (3, 4) is deformable within the elastic range such that movements between the drum and the vehicle frame are compensated for, **characterized in that** an output flange (4) which can be connected to the drum of the transit mixer comprises an output shaft (3) which is connected to drive parts (2) of the transmission, and this output shaft (3) has cutouts (8) by means of which it is deformable within the elastic range, wherein the torque is transmitted via the output shaft (3) and the weight of the drum is supported via a spherical bearing (5), wherein the cutouts (8) are arranged between the spherical bearing and a reduction gear unit (2).

## Revendications

1. Mécanisme pour une bétonnière roulante, pour l'entraînement de son tambour, dans lequel une bride de prise de force (4) peut être connectée de manière solidaire en rotation avec le tambour de la bétonnière roulante et un boîtier (6) du mécanisme peut être amené en liaison fixement avec un châssis de véhicule de la bétonnière roulante, et le mécanisme présente au moins un composant (3, 4) pour compenser les mouvements entre le châssis du véhicule et le tambour, ce composant (3, 4) pouvant être déformé dans la plage élastique de telle sorte que les mouvements entre le tambour et le châssis du véhicule soient compensés, **caractérisé en ce qu'**une bride de prise de force (4), qui peut être connectée au tambour de la bétonnière roulante, présente un arbre de prise de force (3) qui est connecté à des parties d'entraînement (2) du mécanisme, cet arbre de prise de force (3) présentant des évidements (8) par lesquels celui-ci peut être déformé dans la plage élastique, le couple pouvant être transmis par le biais de l'arbre de prise de force (3) et la force de pesanteur du tambour étant supportée par le biais d'un support sur palier sphérique (5), les évidements (8) étant disposés entre le support sur palier sphérique et un mécanisme d'assistance (2).
